# EUROPÄISCHE PATENTANMELDUNG

(11) **EP 2 101 157 A2**
(43) Veröffentlichungstag der Anmeldung: **16.09.2009**
(21) Anmeldenummer: 08405252.1
(22) Anmeldetag: 06.10.2008
(51) Int. Cl.: G01D 5/14, B62D 15/02

(54) **Magnetischer Drehwinkelsensor**

(30) Priorität: 14.03.2008 CH 3832008
(71) Anmelder: Polycontact AG, 7007 Chur (CH)
(72) Erfinder: Imhof, Andreas, 7000 Chur (CH); Hoffmann, Andrea, 7203 Trimmis (CH)
(74) Vertreter: Bohest AG Branch Ostschweiz

(57) **Zusammenfassung**

Es ist ein magnetischer Drehwinkelsensor (1) zur Erfassung des Drehwinkels eines Bauteils bei Einfach- und Mehrfachumdrehungen beschrieben. Der Drehwinkelsensor (1) weist wenigstens einen Hallsensor (5) und einen relativ zum Hallsensor (5) verdrehbaren Permanentmagneten (6) auf, der diametral zur Drehachse durchmagnetisiert ist. Mit dem Hallsensor (5) ist eine Auswerteelektronik zur Ermittlung des Drehwinkels aus den von dem Hallsensor (5) detektierten Messdaten verbunden. Der Hallsensor (5) ist zur vektoriellen Auswertung des vom Permanentmagneten (6) erzeugten Magnetfeldes ausgebildet und weist wenigstens zwei in einer senkrecht zur Drehachse verlaufenden Ebene angeordnete Messfelder auf, die um 90° gegeneinander verdreht sind. Zur Unterscheidung der einzelnen 360° Umdrehungen des Permanentmagneten (6) ist der Hallsensor (5) zur Erfassung einer dritten Komponente des Magnetfeldes ausgebildet, deren Grösse durch Änderung der relativen axialen und/oder horizontalen Lage des Permanentmagneten (6) in Bezug auf den Hallsensor (5) veränderbar ist.

## Beschreibung

Die Erfindung betrifft einen magnetischen Drehwinkelsensor zur Erfassung von Drehwinkeln, die 360° überschreiten, gemäss dem Oberbegriff des Patentanspruchs 1.

In vielen Anwendung müssen Winkel grösser 360° gemessen werden. Beispielsweise werden dazu elektromechanische oder elektrooptische Systeme eingesetzt, die neben einer Messung des Winkels von 0° - 360° eine mechanische oder optische Einrichtung zur Erfassung der Anzahl von Umdrehungen aufweisen, um so auch Winkel grösser 360° bestimmen zu können. Die Anzahl der Umdrehungen wird beispielsweise in einem EE-PROM abgespeichert und bei Bedarf abgerufen. Bei einem Stromausfall weisen diese bekannten Systeme das Problem auf, dass der Zustand des EE-PROMs nicht mehr notwendigerweise den exakten Drehzustand einer Achse oder Welle wiedergibt. Diese könnte ja in der Zwischenzeit weiter gedreht worden sein, was aufgrund des Stromausfalls vom EE-PROM nicht registriert wird. Kostengünstige 10-Gang Potentiometer beispielsweise genügen oft nicht den Anforderungen an Auflösung und Zuverlässigkeit. Mechanische Lösungen weisen einen hohen Verschleiss auf und kommen daher nicht in Frage.

Viele berührungslose Winkelsensoren beruhen auf Magnetbasis. Dazu ist ein Magnet auf einer drehenden Achse montiert. Das sich bei der Drehung der Achse verändernde Magnetfeld wird von einem oder mehreren Hallsensoren ausgewertet. Der auf der Achse montierte Magnet ist dabei diametral zur Drehachse magnetisiert. Häufig werden zwei Hallsensoren eingesetzt, die rechtwinkelig zueinander in enger Nachbarschaft des Magneten angeordnet und auf die Stirnseiten des Magneten ausgerichtet sind. Bei der Drehung des auf der Achse montierten Magneten erzeugt einer der beiden Hallsensoren ein Sinussignal während der andere, um 90° gedreht angeordnete Hallsensor ein Cosinussignal liefert. Eine Auswerteelektronik bildet aus den beiden gemessenen Signalen den Arcustangens, um daraus auf den Drehwinkel zurückzuschliessen. Aber auch bei diesen berührungslosen Winkelsensoren besteht das Problem, die Anzahl der Drehungen zuverlässig zu erfassen, um dadurch auch Winkel grösser als 360° erfassen zu können.

In der EP 1 076 809 sind mehrere Varianten von sogenannten Multiturn-Codedrehgebern beschrieben, die alle auf dem Prinzip von Codescheiben beruhen, auf denen mehrere Magnete angeordnet sind, die von mehreren Hallsensoren abgetastet werden, um aus den Messwerten auf den Absolutwert des Drehwinkels rückschliessen zu können. Weiters ist aus der EP 1 076 809 ein Multiturn-Codedrehgeber bekannt, der aus einem Singleturn-Teil und einem Multiturn-Teil besteht. Die beiden separaten Drehgeber-Teile weisen scheibenförmig ausgebildete Codeträger auf, die über ein Untersetzungsgetriebe miteinander gekoppelt sind. Separate Sensoren detektieren die auf den Codeträgerscheiben codierten Informationen, um daraus den Gesamtdrehwinkel zu bestimmen. Die beschriebenen Anordnungen weisen einen relativ komplexen Aufbau auf, sind wenig robust und erfordern eine aufwendige Justierung der Sensoren, meist Hallsensoren relativ zu den Codeträgerscheiben und den darauf montierten Magneten oder zu den codierten Segmenten der Codeträgerscheiben.

Aufgabe der vorliegenden Erfindung ist es daher, einen berühungslosen Drehwinkelsensor zu schaffen, der es erlaubt, auch Drehwinkel zu erfassen, die 360° überschreiten. Dabei soll der Drehwinkel absolut erfassbar sein. Stromausfälle oder dergleichen Unterbrechungen sollen keinen Einfluss auf die Genauigkeit des gemessenen Drehwinkels haben und sollen insbesondere zu keinen Fehlern in der Erfassung des Drehwinkels führen. Die Anordnung soll weitgehend unkritisch gegenüber Justiertoleranzen sein. Dabei soll der Drehwinkelsensor einen einfachen, kompakten und robusten Aufbau aufweisen, der auch einen Einsatz bei erschütterungsanfälligen Anwendungen, beispielsweise in einem Kraftfahrzeug, erlaubt.

Die Lösung dieser Aufgaben besteht in einem magnetischen Drehwinkelsensor, welcher die im kennzeichnenden Abschnitt des Patentanspruchs 1 angeführten Merkmale aufweist. Weiterbildungen und/oder vorteilhafte Ausführungsvarianten der Erfindung sind Gegenstand der abhängigen Ansprüche.

Der erfindungsgemässe magnetische Drehwinkelsensor zur Erfassung des Drehwinkels eines Bauteils bei Einfach- und Mehrfachumdrehungen weist wenigstens einen Hallsensor und einen relativ zum Hallsensor verdrehbaren Permanentmagneten auf, der diametral zur Drehachse durchmagnetisiert ist. Mit dem Hallsensor ist eine Auswerteelektronik zur Ermittlung des Drehwinkels aus den von dem Hallsensor detektierten Messdaten verbunden. Der Hallsensor ist zur vektoriellen Auswertung des vom Permanentmagneten erzeugten Magnetfeldes ausgebildet und weist wenigstens zwei in einer senkrecht zur Drehachse verlaufenden Ebene angeordnete Messfelder auf, die um 90° gegeneinander verdreht sind. Zur Unterscheidung der einzelnen 360° Umdrehungen des Permanentmagneten ist der Hallsensor zur Erfassung einer dritten Komponente des Magnetfeldes ausgebildet, deren Grösse durch Änderung der relativen axialen und/oder horizontalen Lage des Permanentmagneten in Bezug auf den Hallsensor veränderbar ist.

Der zur vektoriellen Auswertung des Magnetfeldes ausgebildete Hallsensor liefert aufgrund beispielsweise der x- und der y-Komponenten des vom Permanentmagneten erzeugten Magnetfeldes eine Winkelinformation darüber, wie weit der Permanentmagnet relativ zum Hallsensor verdreht ist, indem die beiden Komponenten über eine Arcustangensbeziehung ausgewertet werden. Damit ist der Drehwinkelsensor zur Erfassung von Drehwinkeln zwischen 0° und 360° ausgebildet. Um den Messbereich auch auf Drehwinkel grösser als 360° auszudehnen, wird eine weitere Messgrösse des Magnetfeldes erfasst, die sich bei der Verdrehung des Permanentmagneten relativ zum Hallsensor verändert, und aus der sogenannte Indexinformationen über die einzelnen 360° Umdrehungen ableitbar sind. Die Kombination der Winkelinformation mit der Indexinformation liefert schliesslich den Absolutwert des Drehwinkels. Der erfindungsgemässe Aufbau des Drehwinkelsensors ist einfach und hinsichtlich Justiergenauigkeiten relativ unkritisch. Der absolute Drehwinkel wird berührungslos erfasst und benötigt keine mechanischen und/oder optischen Einrichtungen zum Zählen der Perioden. Auf EE-PROMS und dergleichen Speichereinrichtungen kann verzichtet werden. Daher ist der Drehwinkelsensor auch unempfindlich gegenüber Stromausfällen. Der absolute Drehwinkel wird unmittelbar aus dem vom Permanentmagneten erzeugten Magnetfeld ermittelt. Der Drehwinkelsensor ist robust und relativ unempfindlich gegenüber Erschütterungen.

Eine erste Ausführungsvariante des magnetischen Drehwinkelsensors sieht vor, dass bei der Verdrehung des Permanentmagneten relativ zum Hallsensor der axiale Abstand des Permanentmagneten vom Hallsensor veränderbar ist. Die zusätzlich erfasste Kenngrösse des vom Permanentmagneten erzeugten Magnetfeldes ist dessen Amplitude, die sich abhängig vom Abstand des Permanentmagneten vom Hallsensor verändert. Indem die Amplitude als Indexinformation herangezogen wird, kann in Verbindung mit der vektoriell bestimmten Winkelinformation über eine 360° Periode relativ einfach auf den Absolutwert des Drehwinkels geschlossen werden. Einflüsse des sich infolge der Abstandsveränderung verändernden Luftspalts können in der Auswerteeinheit rechnerisch berücksichtigt werden.

Die Höhenverstellbarkeit des Permanentmagneten bei dessen Verdrehung erfolgt zweckmässigerweise über eine Welle, die mit einem Aussengewinde versehen ist und mit einer in einem Sensorgehäuse vorgesehenen Gewindebuchse zusammenwirkt. Die Welle ist in der Buchse definiert, d.h. abhängig vom Gewindegang höhenverstellbar, was eine zusätzliche Indexierungsmöglichkeit für die 360° Perioden eröffnet. Ausserdem ist durch die gewählte Anordnung die Verstellung des Permanentmagneten auf die Verdrehung und auf die Höhenverstellung beschränkt. Seitliche laterale Verschiebungen werden durch das Zusammenwirken von Gewindezapfen und Gewindebuchse zuverlässig verhindert. Es versteht sich, dass der Gewindezapfen auch am Sensorgehäuse vorgesehen sein kann, während die Gewindebuchse unmittelbar in den Permanentmagneten oder in einen Magnetträger eingelassen sein kann.

Indem der innerhalb des Sensorgehäuses angeordnete Hallsensor aussermittig angeordnet ist, ist der Drehwinkelsensor auch auf einer das Gehäuse durchsetzenden Achse montierbar.

Eine insbesondere hinsichtlich der erzielbaren geringen Bauhöhen vorteilhafte Ausführungsvariante des erfindungsgemässen magnetischen Drehwinkelsensors sieht vor, dass eine Magnetisierungsrichtung des Permanentmagneten in seiner Ausgangsstellung mit den von den Messfeldern des Hallsensors festgelegten x- und y-Richtungen jeweils einen Winkel > 0° einschliesst. Der Permanentmagnet ist dabei derart angeordnet, dass er bei seiner Drehung in einer zu der durch die x- und y-Richtungen festgelegten Ebene parallelen Ebene relativ zum Hallsensor verschiebbar ist. Die dabei erfasste zusätzliche Kenngrösse des vom Permanentmagneten erzeugten Magnetfeldes ist dessen z-Komponente. Die z-Komponente des Magnetfeldes dient als Indexsignal für die Unterscheidung der einzelnen 360° Umdrehungen und erlaubt in Verbindung mit der vektoriellen Auswertung der x- und y-Komponenten des Magnetfeldes eine Absolutmessung des Gesamtdrehwinkels bei Einfach- und Mehrfachdrehungen. Es erfolgt nur eine Lateralverschiebung des Permanentmagneten, welche seiner Drehbewegung überlagert ist. Der Luftspalt verändert sich nicht und die Amplitude des Magnetfeldes verändert sich nur unwesentlich.

Der Permanentmagnet ist bei seiner Drehung entlang eines sich diagonal zur vom Permanentmagneten beschriebenen Kreisbahn erstreckenden, mitdrehenden Mitnehmerteils zwangsgeführt. Die daraus bei der Verdrehung des Permanentmagneten resultierende laterale Verschiebung erfolgt kontrolliert. Dadurch werden widersprüchliche Messungen der z-Komponente vermieden. Ausserdem erhöht die Zwangsführung die Robustheit der Sensoranordnung.

Eine zweckmässige Ausführungsvariante des magnetischen Drehwinkelsensors sieht vor, dass der Permanentmagnet in seiner Ausgangsstellung etwa mittig in einem Gehäuse des Drehwinkelsensors angeordnet ist und durch Verdrehen im oder entgegen dem Uhrzeigersinn in die eine oder in die entgegengesetzte Richtung verstellbar ist. Durch die gewählte Anordnung sind die Drehwinkel bei Mehrfachumdrehungen im und entgegen dem Uhrzeigersinn etwa in vergleichbaren Grössenordnungen erfassbar. Soll hingegen der erfassbare Drehwinkelbereich nur für einen einzigen Drehsinn möglichst gross gehalten sein, kann der Permanentmagnet seine Ausgangsposition auch in einer der lateralen Verschiebe-Endstellungen aufweisen.

Zur Erzielung besonders geringer Bauhöhen des magnetischen Drehwinkelsensors ist der Permanentmagnet oder ein Magnetträger für den Permanentmagneten mit einem Eingreifstift oder dergleichen ausgestattet, der in eine spiralförmige Nut eingreift, die in einem Deckelteil eines Gehäuses des Drehwinkelsensors ausgebildet ist. Bei dieser Ausführungsvariante des Drehwinkelsensors gleitet der Eingreifstift nach Art einer Schallplattennadel in der spiralförmigen Nut, welche dabei der spiralförmigen Rille einer Schallplatte entspricht. Auf diese Weise führt die Drehbewegung des Permanentmagneten zu einer lateralen Verschiebung des Permanentmagneten. Die laterale Verschiebung des Permanentmagneten hat eine Veränderung der z-Komponente des Magnetfeldes zur Folge, welche abgegriffen und als Indexsignal für die Feststellung der einzelnen 360° Umdrehungen dient.

Zur Übertragung der Drehbewegung eines rotierbaren Teiles sind der Permanentmagnet bzw. dessen Magnetträger momentschlüssig mit einer Aufnahme für eine rotierbare Welle verbunden, die durch das Deckelteil geführt ist und eine drehmomentschlüssige Verbindung mit der rotierbaren Welle ermöglicht. Auch diese Anordnung trägt dem Ziel einer möglichst geringen Bauhöhe des Drehwinkelsensors Rechnung.

Der Hallsensor ist zweckmässigerweise in axialer Verlängerung der Aufnahme für die rotierbare Welle fest an einem dem Deckelteil gegenüberliegenden Gehäuseteil montiert. Die axiale Anordnung des Hallsensors sorgt für definierte Verhältnisse hinsichtlich der vektoriellen Auswertung des Magnetfeldes des rotierbar und lateral verschiebbar angeordneten Permanentmagneten. Ausserdem erhöht die gewählte Anordnung auch noch die Robustheit des Drehwinkelsensors.

Ein besonders einfacher Aufbau des magnetischen Drehwinkelsensors ergibt sich, wenn als Hallsensor ein sogenannter Drei-Achsen-Hallsensor eingesetzt wird. Derartige Hallsensoren weisen bereits eine Schichtstruktur auf, die eine 3-D Auswertung eines Magnetfeldes ermöglicht. Die Auswerteeinheit ist ebenfalls bereits auf dem in Chip-Bauweise erstellten Hallsensor integriert.

Weitere Vorteile und Merkmale der Erfindung ergeben sich aus der nachfolgenden Beschreibung eines Ausführungsbeispiels des erfindungsgemässen magnetischen Drehwinkelsensors. Es zeigen in nicht massstabsgetreuer schematischer Darstellung:
- Fig. 1: ein Axialschnitt eines magnetischen Drehwinkelsensors mit geöffnetem Sensorgehäuse;
- Fig. 2: eine Draufsicht auf ein Deckelteil des Sensorgehäuses mit einem angedeuteten Hallsensor ;
- Fig. 3: eine perspektivische Darstellung des Deckelteils des Sensorgehäuses; und
- Fig. 4: ein Diagramm mit einer Darstellung der aus den vom Hallsensor detektierten Signalen ermittelten Winkelinformationen und dem Indexsignal.

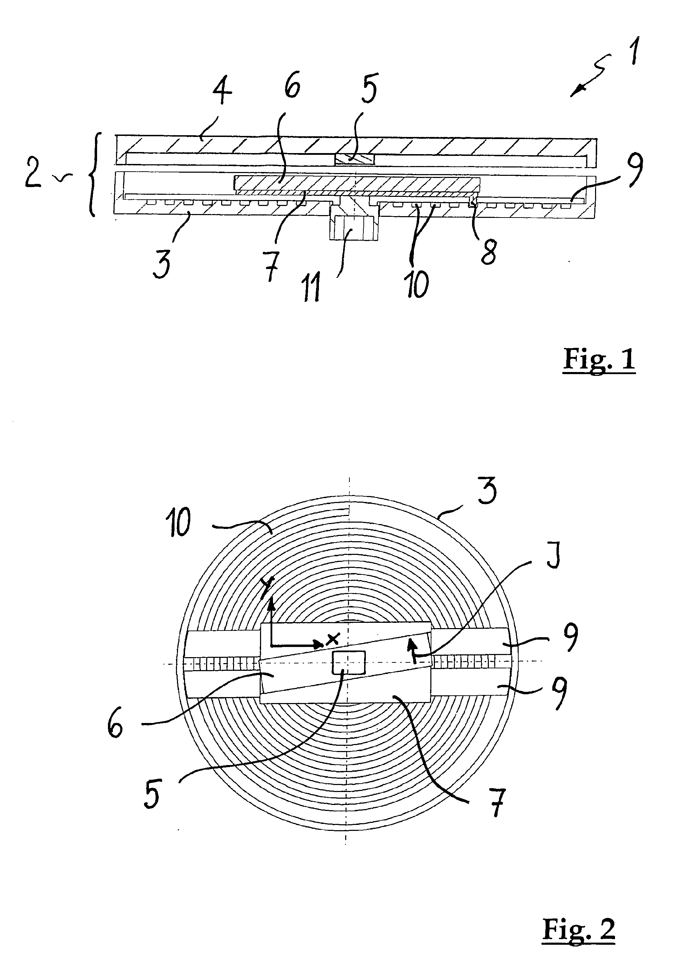

Ein in Fig. 1 in axial geschnittener Darstellung gezeigter magnetischer Drehwinkelsensor trägt gesamthaft das Bezugszeichen 1. Die Einzelkomponenten des Drehwinkelsensors 1 sind ein einem Sensorgehäuse 2 angeordnet, welches in Fig. 1 in geöffnetem Zustand dargestellt ist und sich aus einem Deckelteil 3 und aus einem Gehäuseteil 4 zusammensetzt. Das Gehäuseteil und das Deckelteil sind normalerweise miteinander verklebt oder vergossen. Im Deckelteil 3 sind ein Magnetträger 7 für einen Permanentmagneten 6 und ein Mitnehmerteil 9 angeordnet und momentenschlüssig mit einer Aufnahme 11 für eine rotierbare Welle verbunden, die drehmomentschlüssig in der Aufnahme 11 befestigbar ist. Der Magnetträger 7 ist an seiner Unterseite mit einem Eingreifstift 8 ausgestattet, der in eine im Deckelteil 3 ausgebildete spiralförmige Nut 10 eingreift. Indem der Eingreifstift 8 des Magnetträgers 7 in die spiralförmige Nut 10 eingreift, wird er zusammen mit dem darauf befindlichen Permanentmagneten 6 bei der Drehung der Aufnahme 11 entlang des Mitnehmerteils 9 seitlich verschoben.

Die mechanische Verschiebefunktion bei der Drehung entspricht dabei in etwa derjenigen eines Tangentialtonarms bei einem Tangentialplattenspieler. Zum Unterschied davon steht jedoch das Deckelteil 3 (entspricht einer Schallplatte) still, während der Magnetträger 7 mit Permanentmagnet 6 und Mitnehmerteil 9 (entspricht dem Tangentialtonarm mit Führung) gedreht werden. Der Eingreifstift 8 entspricht der Nadel des am Tangentialtonarm montierten Tonabnehmersystems, die sprialförmige Nut 10 entspricht der Rille der Schallplatte.

In einem Gehäuseteil 4 ist etwa in axialer Verlängerung der Aufnahme 11, oberhalb des Permanentmagneten ein Hallsensor 5 befestigt. Während der Permanentmagnet 6 zusammen mit dem Magnetträger 7 und dem Mitnehmerteil 9 die Drehung einer drehschlüssig in der Aufnahme 11 fixierten Welle mitmacht, ist der Hallsensor 5 feststehend im Gehäuseteil 4 montiert.

Der Hallsensor 5 ist zur vektoriellen Auswertung des vom Permanentmagneten 6 erzeugten Magnetfeldes ausgebildet und weist dazu wenigstens zwei Hallmessfelder auf, die zueinander um 90° in der Ebene gedreht angeordnet sind. Der Permanentmagnet 6 ist diametral zur Drehachse durchmagnetisiert, was in Fig. 2 durch den Pfeil J angedeutet ist. Durch die beiden Hallmessfelder des Hallsensors 5 wird eine Ebene mit definierten Richtungen x und y aufgespannt, welche sich nicht verändern, da der Hallsensor 5 ja fest montiert ist. Bei der Drehung des Permanentmagneten 6 detektiert der Hallsensor 5 die x-und die y-Komponenten des seine Richtung verändernden Magnetfeldes. Aus den detektierten Signalen kann über eine Arcustangensbeziehung eine Winkelinformation über einen Drehbereich von 0° bis 360° abgeleitet werden.

Bei der Drehung der Aufnahme 11 drehen sich das Mitnehmerteil 9 und der Magnethalter 7 mit dem Permanentmagneten 6 relativ zum Deckelteil 3. Indem der Eingreifstift 8 in die spiralförmige Nut 10 im Deckelteil 3 eingreift, wird der Magnethalter 7 mit dem darauf montierten Permanentmagneten 6 entlang des Mitnehmerteils 9 lateral verschoben. Dieser relativen Verschiebung des Permanentmagneten 6 zum Mitnehmerteil 9 entspricht auch eine laterale Verschiebung des Permanentmagneten 6 relativ zum Hallsensor 5 in einer zur von den Hallmessfeldern definierten x- und y-Achsen Ebene parallelen Verschiebeebene. Dabei ändert sich für den Hallsensor 5 auch die z-Komponente des vom Permanentmagneten 6 erzeugten Magnetfeldes. Der Hallsensor 5 detektiert die Veränderung der z-Komponente des Magnetfeldvektors. Dieses sogenannte Indexsignal wird zur Auswertung der jeweiligen 360° Umdrehung herangezogen. Der absolute Drehwinkel ergibt sich somit aus einer Überlagerung der vektoriell ermittelten Winkelinformation mit dem Indexsignal für die jeweilige Periode. Damit die z-Komponente des vom Permanentmagneten 6 erzeugten Magnetfeldes auch sicher vom Hallsensor erfasst werden kann, ist der Permanentmagnet 6 gegenüber den durch die Hallmessfelder festgelegten x- und y-Richtungen derart verdreht auf dem Magnetträger 7 montiert, dass seine Längsachse mit den x- und y-Richtungen einen Winkel > 0° einschliesst.

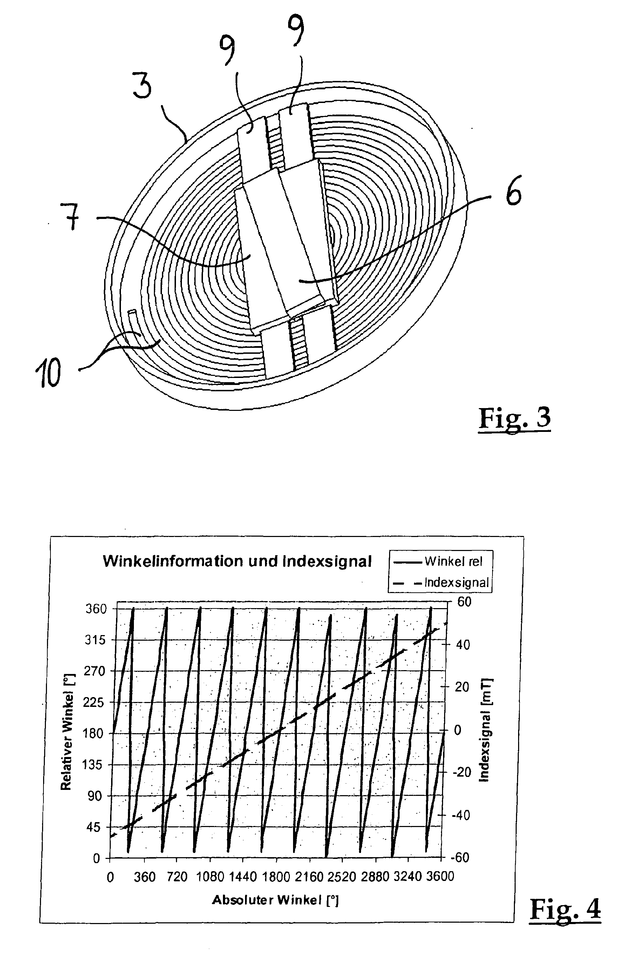

Fig. 3 ist eine perspektivische Darstellung der im Deckelteil 3 angeordneten Komponenten des Drehwinkelsensors. Bei dem dargestellten Ausführungsbeispiel sind zwei Mitnehmerteile 9 vorgesehen, entlang denen der Magnetträger 7 bei seiner Drehung lateral verschiebbar ist. Die in der Ebene verdrehte Montage des Permanentmagneten ist ebenfalls gut ersichtlich. Die spiralförmige Nut ist bei 10 angedeutet.

Fig. 4 ist ein Beispiel einer diagrammatischen Wiedergabe der vom Hallsensor gelieferten Winkelinformation und des Indexsignals über einen Bereich von 10 Umdrehungen bzw. von 0° bis 3600°. In dem Diagramm ist der relative Drehwinkel einer Periode von 0° bis 360° jeweils durch eine durchgehende Linie angegeben. Der relative Drehwinkel wird aus der x- und y-Komponente des Magnetfeldes durch eine Arcustangensbeziehung ermittelt. Zur Unterscheidung der einzelnen Umdrehungen bzw. Perioden benötigt man das Indexsignal, das im Diagramm durch die unterbrochene Linie angegeben ist. Das Indexsignal wird aus der Auswertung der z-Komponente des vom Permanentmagneten erzeugten Magnetfeldes gewonnen. Es gibt eine grobe Information über die jeweilige Lage des Permanentmagneten zur Unterscheidung der Perioden, während die Winkelinformation mit hoher Auflösung den Winkel innerhalb einer Periode wiedergibt. Somit ergibt sich der absolute Drehwinkel aus der Überlagerung des groben Indexsignals und der viel genaueren Winkelinformation.

Für die Ermittlung der Winkelinformation und des Indexsignals wird mit Vorteil ein sogenannte Drei-Achsen Hallsensor eingesetzt, dessen Schichtaufbau für die dreidimensionale Auswertung des Magnetfeldes ausgebildet ist. Ein Beispiel eines derartigen Drei-Achsen Hallsensors ist der Sensor MLX90333, erhältlich von der Firma Melexis Semiconductors, Rozendaalstraat 12, B-8900 leper, Belgien. Dieser auf Chipbasis beruhende Hallsensor weist bereits eine integrierte Auswerteeinheit auf, welche im gewünschten Umfang programmierbar ist. Es versteht sich jedoch, dass auch andere Arten von Drei-Achsen Hallsensoren bzw. 3-D Hallsensoren einsetzbar sind.

Die Erfindung ist am Beispiel der Auswertung aller drei Raumkomponenten des vom Permanentmagneten erzeugten Magnetfeldes erläutert worden. Alternativ könnte für die Ermittlung des Indexsignals zur Bestimmung der jeweiligen Umdrehung bzw. Periode auch eine andere Kenngrösse des Magnetfeldes herangezogen werden. Beispielsweise könnte zusätzlich zu der vektoriellen Auswertung des Magnetfeldes durch einen geeignet aufgebauten Hallsensor die vom Hallsensor gemessene Amplitude des Magnetfeldes verändert werden. Dazu könnte vorgesehen sein, dass bei der Verdrehung des Permanentmagneten relativ zum Hallsensor der axiale Abstand des Permanentmagneten vom Hallsensor veränderbar ist. Indem die Amplitude als Indexinformation herangezogen wird, kann in Verbindung mit der vektoriell bestimmten Winkelinformation über eine 360° Periode relativ einfach auf den Absolutwert des Drehwinkels geschlossen werden. Einflüsse des sich infolge der Abstandsveränderung verändernden Luftspalts können in der Auswerteeinheit rechnerisch berücksichtigt werden.

Die Höhenverstellbarkeit des Permanentmagneten bei dessen Verdrehung erfolgt beispielsweise über eine Welle, die mit einem Aussengewinde versehen ist und mit einer im Sensorgehäuse vorgesehenen Gewindebuchse zusammenwirkt. Die Welle ist in der Buchse definiert, d.h. abhängig vom Gewindegang höhenverstellbar, was eine zusätzliche Indexierungsmöglichkeit für die 360° Perioden eröffnet. Ausserdem ist durch die gewählte Anordnung die Verstellung des Permanentmagneten auf die Verdrehung und auf die Höhenverstellung beschränkt. Seitliche laterale Verschiebungen werden durch das Zusammenwirken von Gewindezapfen und Gewindebuchse zuverlässig verhindert. Es versteht sich, dass der Gewindezapfen auch am Sensorgehäuse vorgesehen sein kann, während die Gewindebuchse unmittelbar in den Permanentmagneten oder in einen Magnetträger eingelassen sein kann. Eine aussermittige Anordnung des Hallsensors im Sensorgehäuse erlaubt auch eine Montage des Drehwinkelsensors auf einer das Gehäuse durchsetzenden drehbaren Achse.

## Patentansprüche

1. Magnetischer Drehwinkelsensor zur Erfassung des Drehwinkels eines Bauteils bei Einfach- und Mehrfachumdrehungen, mit wenigstens einem Hallsensor (5) und einem relativ zum Hallsensor (5) verdrehbaren Permanentmagneten (6), der diametral zur Drehachse durchmagnetisiert ist, und mit einer mit dem Hallsensor (5) verbundenen Auswerteelektronik zur Ermittlung des Drehwinkels aus den von dem Hallsensor (5) detektierten Messdaten, **dadurch gekennzeichnet, dass** der Hallsensor (5) zur vektoriellen Auswertung des vom Permanentmagneten (6) erzeugten Magnetfeldes ausgebildet ist und wenigstens zwei in einer senkrecht zur Drehachse verlaufenden Ebene angeordnete Messfelder aufweist, die um 90° gegeneinander verdreht sind, und dass der Hallsensor (5) zur Erfassung einer dritten Komponente des Magnetfeldes ausgebildet ist, deren Grösse durch Änderung der relativen axialen und/oder horizontalen Lage des Permanentmagneten (6) in Bezug auf den Hallsensor (5) veränderbar ist.

2. Magnetischer Drehwinkelsensor nach Anspruch 1, **dadurch gekennzeichnet, dass** bei der Verdrehung des Permanentmagneten relativ zum Hallsensor der axiale Abstand des Permanentmagneten vom Hallsensor veränderbar ist und die erfasste Kenngrösse die Amplitude des vom Permanentmagneten erzeugten Magnetfeldes ist.

3. Magnetischer Drehwinkelsensor nach Anspruch 2, **dadurch gekennzeichnet, dass** der Permanentmagnet über einen Gewindezapfen, der mit einer in einem Sensorgehäuse vorgesehenen Gewindebuchse zusammenwirkt, durch die Drehbewegung höhenverstellbar ist.

4. Magnetischer Drehwinkelsensor nach Anspruch 2 oder 3, **dadurch gekennzeichnet, dass** der Hallsensor aussermittig montiert ist.

5. Magnetischer Drehwinkelsensor nach Anspruch 1, **dadurch gekennzeichnet, dass** eine Magnetisierungsrichtung (J) des Permanentmagneten (6) in seiner Ausgangsstellung mit den von den Messfeldern des Hallsensors (5) festgelegten x-und y-Richtungen jeweils einen Winkel > 0° einschliesst, und der Permanentmagnet (6) derart angeordnet ist, dass er bei seiner Drehung in einer zu der durch die x- und y-Richtungen festgelegten Ebene parallelen Ebene relativ zum Hallsensor (5) verschiebbar ist, wobei die erfasste Kenngrösse die z-Komponente des vom Permanentmagneten (6) erzeugten Magnetfeldes ist.

6. Magnetischer Drehwinkelsensor nach Anspruch 5, **dadurch gekennzeichnet, dass** der Permanentmagnet (6) bei seiner Drehung entlang eines sich diagonal zur vom Permanentmagneten (6) beschriebenen Kreisbahn erstreckenden, mitdrehenden Mitnehmerteils (9) zwangsgeführt ist.

7. Magnetischer Drehwinkelsensor nach Anspruch 5 oder 6, **dadurch gekennzeichnet, dass** der Permanentmagnet (6) in seiner Ausgangsstellung etwa mittig in einem Sensorgehäuse (2) des Drehwinkelsensors (1) angeordnet ist und durch Verdrehen im oder entgegen dem Uhrzeigersinn in die eine oder in die entgegengesetzte Richtung verschiebbar ist.

8. Magnetischer Drehwinkelsensor nach Anspruch 6 oder 7, **dadurch gekennzeichnet, dass** der Permanentmagnet (6) oder ein Magnetträger (7) für den Permanentmagneten (6) mit einem Eingreifstift (8) oder dergleichen ausgestattet ist, der in eine spiralförmige Nut (10) eingreift, die in einem Deckelteil (3) eines Sensorgehäuses (2) des Drehwinkelsensors (1) ausgebildet ist.

9. Magnetischer Drehwinkelsensor nach Anspruch 8, **dadurch gekennzeichnet, dass** der Permanentmagnet (6) bzw. dessen Magnetträger (7) momentschlüssig mit einer Aufnahme (11) für eine rotierbare Welle ausgestattet sind, die durch das Deckelteil (3) geführt ist und eine drehmomentschlüssige Verbindung mit der rotierbaren Welle ermöglicht.

10. Magnetischer Drehwinkelsensor nach Anspruch 9, **dadurch gekennzeichnet, dass** der Hallsensor (5) in axialer Verlängerung der Aufnahme (11) für die rotierbare Welle fest an einem dem Deckelteil (3) gegenüberliegenden Gehäuseteil (4) montiert ist.

11. Magnetischer Drehwinkelsensor nach einem der vorangehenden Ansprüche, **dadurch gekennzeichnet, dass** der Hallsensor (5) ein Drei-Achsen-Hallsensor ist.
